# EUROPEAN PATENT SPECIFICATION

(11) **EP 0 682 404 B1**
(45) Date of publication and mention of the grant of the patent: **14.10.1998**
(21) Application number: 95105780.1
(22) Date of filing: 18.04.1995
(51) Int. Cl.: H02P 5/40, H02P 1/46

(54) **Electronic device for starting and controlling a permanent-magnet single-phase synchronous motor**
Elektronische Schaltung zum Anlaufen und Steuern eines einphasigen Synchronmotors mit Permanentmagneten.
Dispositif électronique pour le démarrage et le contrôle d'un moteur synchrone monophasé à aimants permanents

(30) Priority: 11.05.1994 IT MI940941
(43) Date of publication of application: 15.11.1995
(73) Proprietor: SISME IMMOBILIARE S.p.A., 22077 Olgiate Comasco (Como) (IT)
(72) Inventor: Erbetta, Carmelo, I-28060 Cureggio, Novara (IT); Oljaca, Miroslav, I-21040 Venegono Superiore, Varese (IT)
(74) Representative: Giambrocono, Alfonso, Dr. Ing.

(56) References cited:
- EP-A- 0 561 425
- EP-A- 0 574 823
- EP-A- 0 654 890
- US-A- 4 409 532

## Description

This patent relates to a device for starting and controlling single-phase synchronous motors with a permanent-magnet rotor, in accordance with the introduction to the main claim.

It is well known that in a motor of the aforesaid type mains-powered at 50 or 60 Hz, the rotor with its load connected can only be started if a particular asymmetrical air gap is used and the load is of low inertia; in any event, the resultant direction of rotation is random.

In this respect the rotor has to be able to generate, by the action of the magnetic flux linked to it, a starting torque such as to overcome the inertia and resistant torque of the load and reach synchronism within a time close to one half-period of the mains frequency. To achieve this the rest axis of the rotor is offset from the magnetic axis of the stator by making the air gap configuration asymmetrical.

With increasing inertia and/or resistant torque, the generated starting torque has to increase, the limit being determined by the maximum stator flux allowed by the permanent magnets without their becoming demagnetized.

This limits the power which the motor can deliver, with the result that only low-power synchronous motors have been used in the more common applications with direct connection to the electricity mains and a direction of rotation on starting which cannot be selected beforehand (random).

In current practice, particularly in the case of three-phase synchronous motors, it is however known to use electronic inverter devices which, connected between the mains and the motor, enable the motor to be powered with an a.c. voltage of variable amplitude and frequency in order to accelerate the motor from zero to the required speed. Such devices often use a sensor which measures the angular position of the rotor and provides a signal which determines the control algorithm for the electrical power pulses to be applied to the motor.

These devices are however costly because of their complex electronic components.

From EP 0 574 823 a low-cost electronic device is also known for starting a permanent-magnet synchronous motor with an asymmetrical air gap (particularly with a 2-pole stator and rotor), this device controlling a static switch connected between electricity mains and the motor, and processing three control quantities, namely the mains voltage, the position of the rotor relative to the position sensor, and the current passing through the motor.

The current signal is processed by a zero crossing detector which provides an output logic signal "1" when the current approaches zero.

The position rotor signal, arriving from the position sensor (e.g. Hall-effect type), is processed by a phase shift circuit the output thereof functionally represents the phisical location of said sensor with respect to the rotor, said circuit providing in output a "zero" value or a "one" value according to the rotor position.

The rotor position signal and the voltage polarity signal form the inputs of an XOR block whose output, together with the current signal, forms the inputs of a logic circuit in an AND combination which controls in output the gate of said static power switch.

US 4,409,532 relates to a start control arrangement for a reversible alternating current split phase induction motor comprising switch means arranged in series with a stator winding of the motor and an alternating voltage current source at main frequency. Start control means are provided for selectively allowing rotation of the motor in one direction or the other.

The prior art relates to an arrangement provided for the starting in a desired direction of an asynchronous motor and not for a synchronous motor.

The main object of the present invention is to provide a device for selectively starting and controlling a motor of the specified type which is simpler than the known device, less complex than the latter and of low cost.

Another object of the invention is to provide a starting device which is able to control all abnormal behaviour by operating on the state of the static switch, for example in the case of a blocked rotor which, if prolonged, could produce dangerous overheating of the stator windings. The device can detect this abnormality and act by cutting off power to the motor, so dispensing with the need to use a thermal protector.

A further object of the invention is to provide a starting device for synchronous motors having any number of poles and any geometrical stator lamination configuration (circular or non-circular).

It is well known that a permanent-magnet single-phase synchronous motor can suffer from considerable operational difficulties (starting, loss of step etc.) if powered at a voltage the amplitude of which varies within a very wide range (as is generally the case for household electrical appliances supplied for the European common market) and/or if a highly variable load is present, hence a further object of the present invention is to provide an electronic device comprising a resident control logic (microcontroller or a like equivalent) which, based on the signals originating from the position sensor and the voltage at the static switch, controls the value of the voltage applied to the motor by varying it by known methods. This prevents excess mechanical power being supplied to the drive shaft for a load which is very low compared with the rated load and also prevents demagnetization due to a too high magnetic stator flux sustained by a current and hence voltage which are high compared with the motor design values.

These and further objects which will be more apparent hereinafter are attained by the device of the invention, the inventive aspects of which are defined in the accompanying claims.

The invention will be more apparent from the description of preferred embodiments thereof given hereinafter by way of non-limiting example with reference to the accompanying drawing, in which:

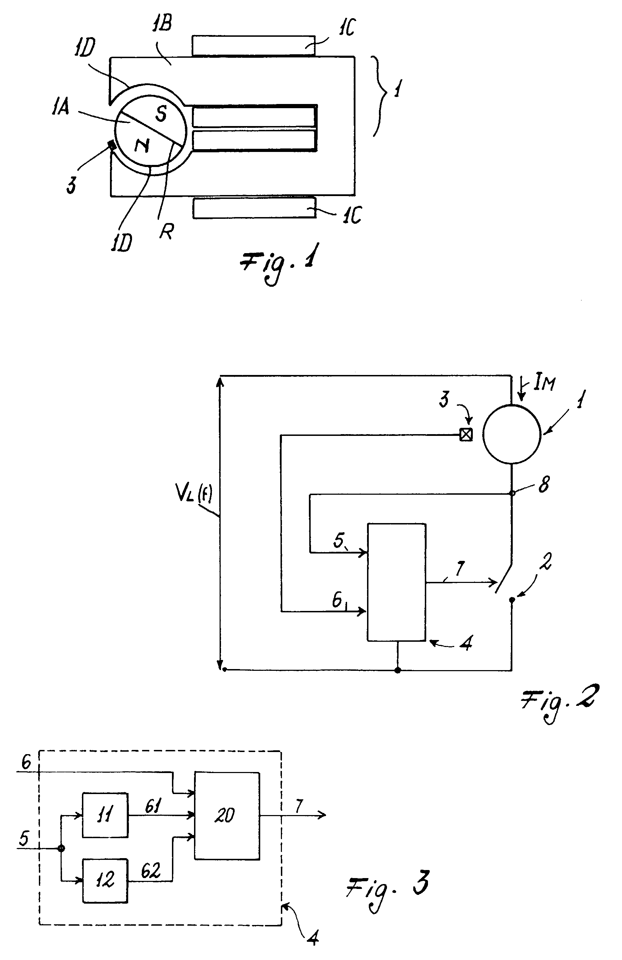

Figure 1 is a schematic representation of a permanent-magnet single-phase synchronous motor with an asymmetrical air gap in its two-pole version;
Figure 2 shows a general configuration of the electronic device, composed of one or more rotor position sensors and an electronic driver circuit which receives as input the signal from the position sensor and the voltage at the static switch; this device controls a permanent-magnet single-phase synchronous motor;

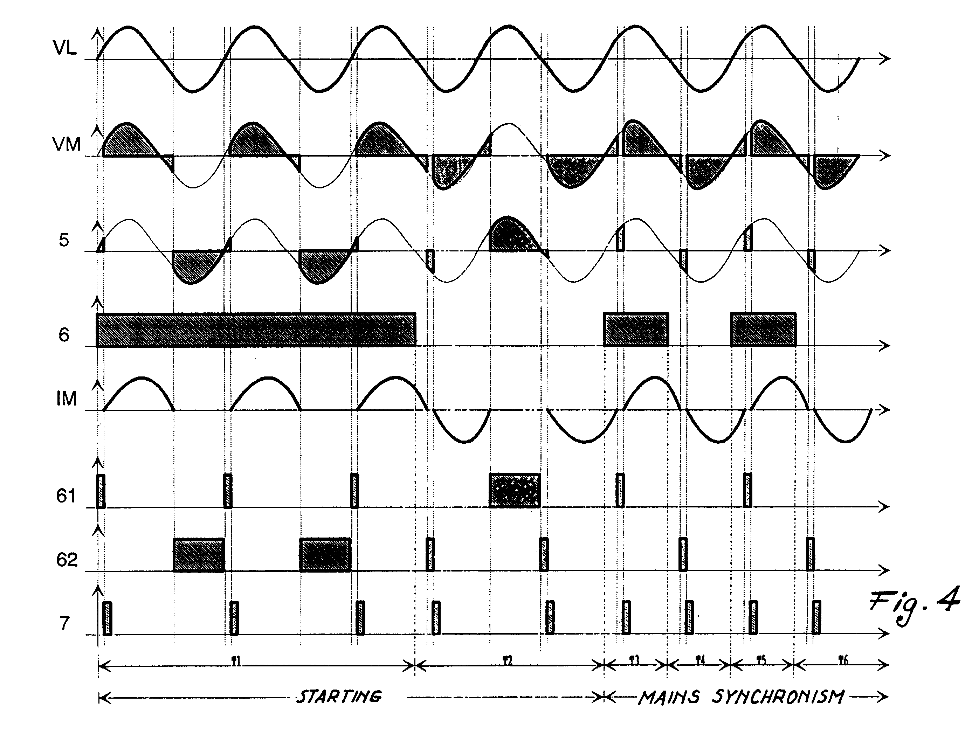

Figure 3 is a block scheme of the electronic driver circuit in its basic configuration for handling the signals representative of the control quantities;
Figure 4 shows, in relation to Figure 3, one of the possible representations of the variation with time of the logic control and driver signals, the mains voltage, the voltage applied to the motor and the current passing through the motor stator during the starting stage and the subsequent synchronization stage of a permanent-magnet single-phase motor;
Figure 5 is a block scheme of the electronic driver circuit in a configuration also arranged to adjust the speed to predefined levels by using suitable and different delays in the control pulses for the static switch;

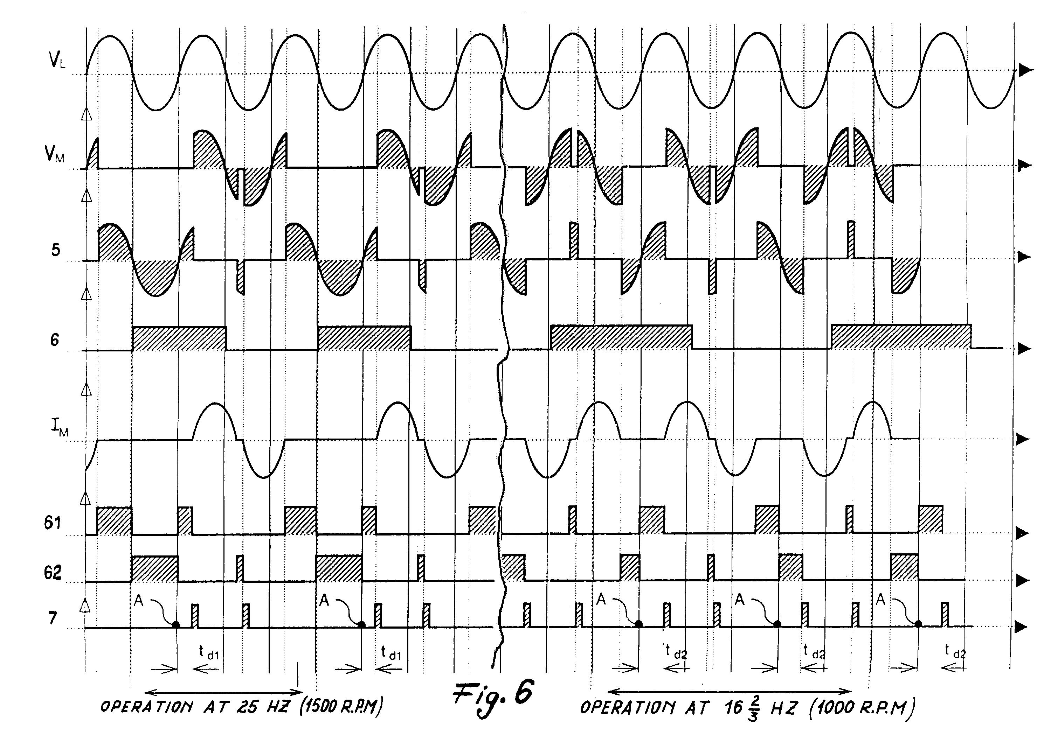

Figure 6 shows, in relation to the scheme of Figure 5, one of the possible representations of the variation with time of the logic control and driver signals, the mains voltage, the voltage applied to the motor and the current passing through the motor stator during two exemplifying situations, each corresponding to a different predetermined rotor rotational speed (1500 and 1000 r.p.m. in the figure);

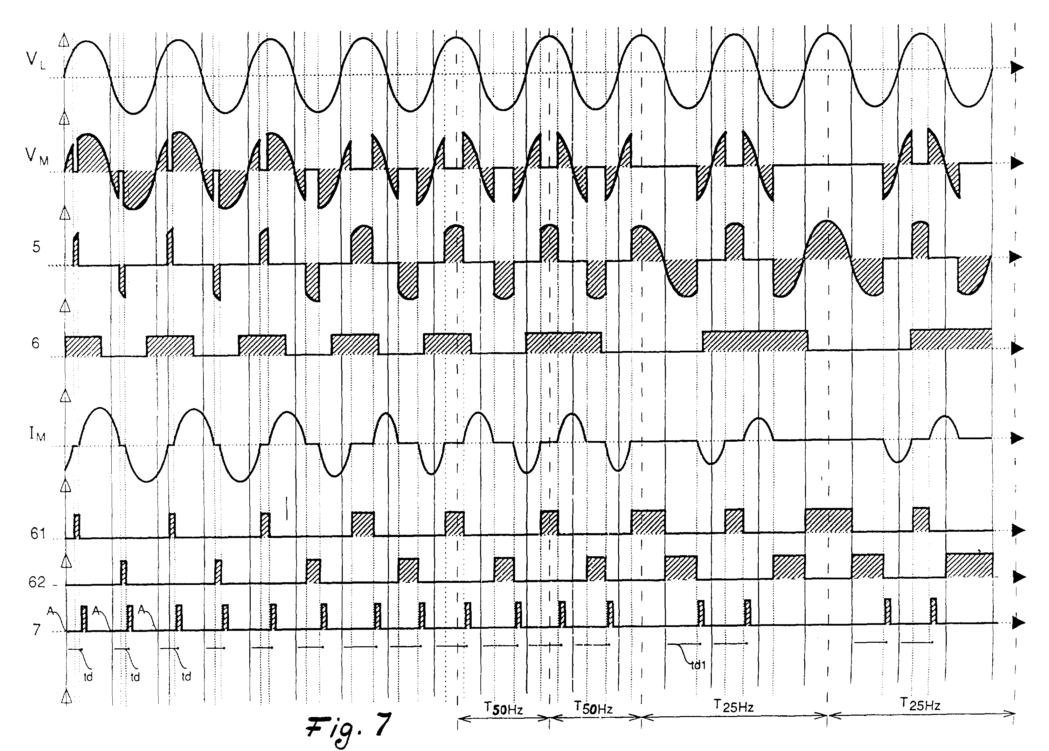

Figure 7 shows the variation in the signals cited in Figure 6 during the transient stage between maximum rotational speed (3000 r.p.m. for a 2-pole motor at 50 Hz) and the immediately following lower speed (1500 r.p.m.);

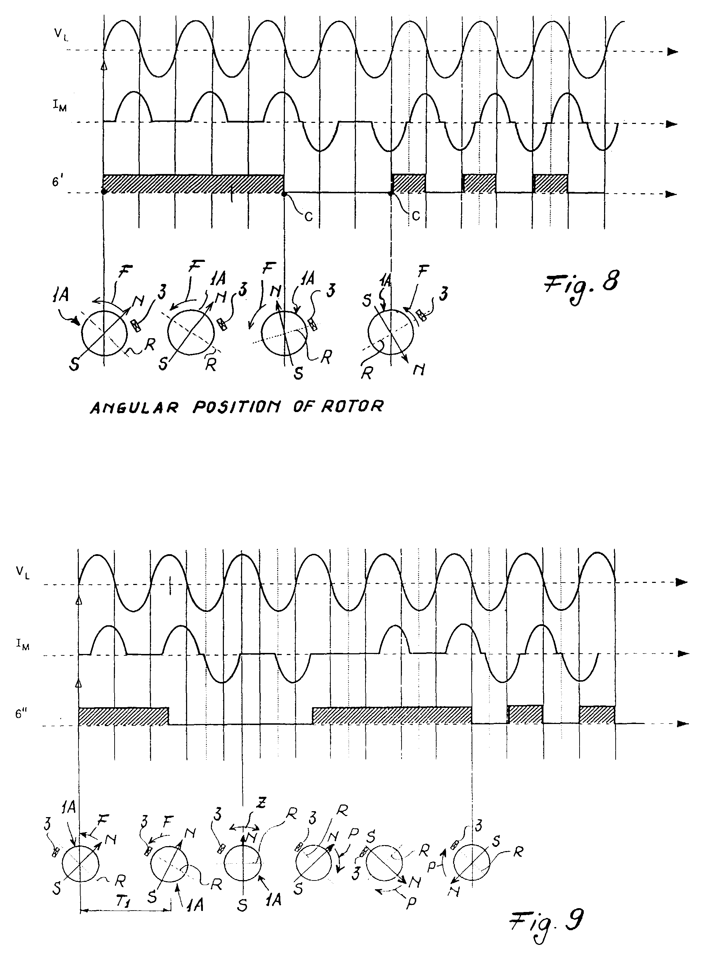

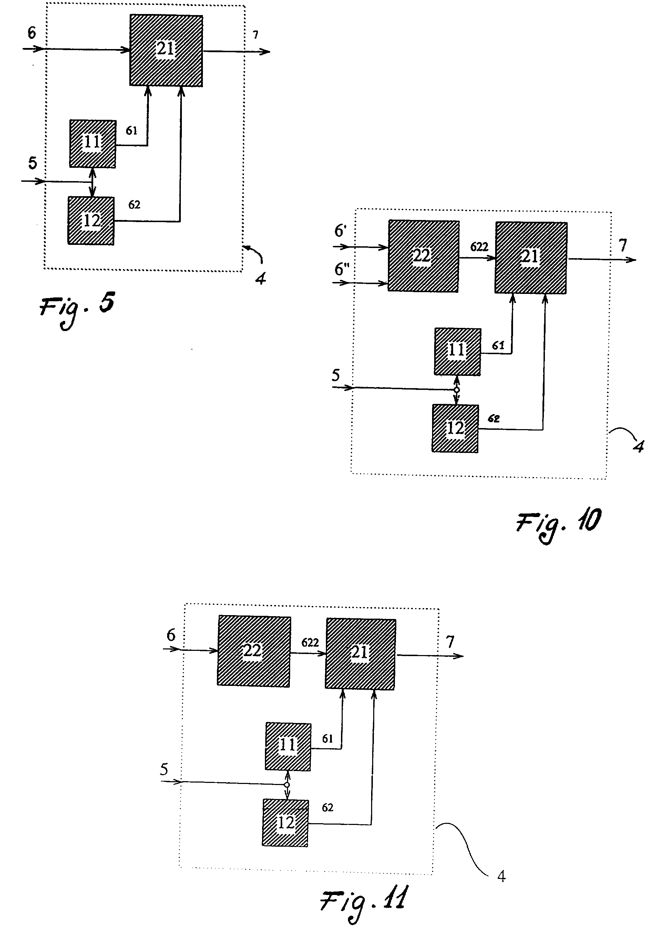

Figure 8 shows, in relation to the scheme of Figure 10, one of the possible representations of the variation with time of the logic control signal from a first position sensor, the mains voltage, the current and the angular position of the rotor during starting with anticlockwise rotation, and also the positioning of the magnetic field-sensitive position sensor (Hall effect) such as to determine starting in said direction of rotation;
Figure 9 shows, in relation to the scheme of Figure 10, one of the possible representations of the variation with time of the logic control signal from a second position sensor, the mains voltage, the current and the angular position of the rotor during starting with clockwise rotation, and also the positioning of the magnetic field-sensitive position sensor (Hall effect) such as to determine starting in said direction of rotation, opposite to that of Figure 8;
Figure 10 represents a block scheme of the electronic driver circuit relative to the logic combination of the voltage signal at the static switch and the signals originating from two angular position sensors differently located along the stator periphery, as shown in Figures 8 and 9, the result of which provides the driver signal for achieving bidirectionality and speed control of the rotor;
Figure 11 represents a block scheme of the electronic driver circuit relative to the logic combination of the voltage signal at the static switch and the signals originating from the angular position sensor for achieving bidirectionality and speed control of the rotor by processing the signal originating from the position sensor.

With reference to Figure 1, the permanent-magnet single-phase synchronous motor 1 to which the electronic device of the patent is applied comprises a permanent-magnet rotor 1A located between the pole pieces of a stator 1B the windings of which are indicated by 1C. Between said stator and said rotor there is an air gap 1D which can be asymmetrical as in Figure 1, or symmetrical.

The motor 1 (Figure 2) is powered by a usual electricity mains providing a sinusoidal a.c. voltage V_{L} at fixed frequency f; I_{M} represents the current through the motor. In series with the motor there is connected a static switch 2 (for simplicity shown as a mechanical switch). Between the motor M and static switch 2 there is a node 8 through which the voltage applied to the static switch 2 is fed to a driver logic circuit 4 via the line 5, this voltage representing a first control quantity. The second control quantity is the angular position of the rotor of the motor 1, this position being identified from the signal 6 which constitutes another input to the driver logic circuit 4. Said signal 6 originates from one or more sensors 3 arranged to recognize the position of the rotor poles, this application already being known in the sector.

Assuming for simplicity of description a two-pole rotor and a sensor 3 for example of Hall effect type, the signal 6 is for example high while the north pole (N) of the rotor faces the sensor 3, and changes at the moment in which the neutral rotor axis R passes in front of the sensor, to become and remain low in the presence of the south pole (S) until the moment in which the neutral axis R again passes in front of the sensor.

This signal can originate from a position sensor 3 based on any operating principle, such as optical, magnetic, etc.

The block 4 representing the control logic provides as output a driver signal 7 which determines the state of the static switch 2.

This latter can conveniently be of electronic type, for example Triac, Scr, transistor or another equivalent device.

A description will now be given of the algorithm implemented within the control logic of the block 4, which can include a microcontroller or the like.

For this purpose reference will be made to the representation of the block 4 shown in Figure 3 and to the time pattern of the control and driver signals shown in Figure 4.

The rotor 1A is assumed to be at rest in a rest position. It will be assumed, with reference to Figure 4, that the signal 6 relative to the angular position of the rotor is in a high logic condition, ie with the north pole facing the sensor 3. In this state, to start the rotor 1A and the load connected to it a voltage having only positive polarity pulses must be applied to the windings 1C of the motor 1, so that a current results within the stator 1B and hence a flux such as to produce at the pole piece of the stator pack a magnetic polarity of the same type as that of the rotor facing it, ie a north polarity.

This produces a repulsion between the rotor and stator 1B with the consequent generation of a drive torque which starts the rotor.

To achieve all this, the control logic block 4 feeds to the static switch 2 a driver signal 7 which puts it into conduction only when the aforestated conditions can arise, ie, in the case of Figure 4, when the signal 6 is high and the signal 5 (which represents the voltage at the static switch) presents positive polarity pulses.

To check the polarity of the voltage supply V_{L} from the mains, the control logic block 4 receives as input the signal 5 corresponding to the voltage at the static switch 2. If this is conducting, this voltage is zero, whereas if open the voltage is equal to the mains voltage V_{L}.

In order to check the polarity of the mains voltage, the signal 5 is treated in a positive threshold sensor block 11 and a negative threshold sensor block 12 providing as output a signal 61 in the case of positive polarity or a signal 62 in the case of negative polarity.

The signal 61 is allowed to pass by the combination logic block 20 only when the signal from the sensor 3 provides a high logic value, hence enabling positive polarity voltages. In this case (period T₁) the block 20 provides a sequence of driver pulses 7 which on putting the switch 2 into conduction means that only voltage pulses of positive polarity pass.

The current I_{M} passing through the stator windings 1C generates a flux which by interacting with the rotor flux is able to produce a drive torque such as to rotate the rotor and the load in the desired direction of rotation.

At the end of the period T₁, the rotor 1A will have undergone a rotation (of about 180°) such as to switch the state of the position sensor 3 which consequently changes its signal from high to low (commencement of period T₂).

In this situation, to provide continuity of rotation, voltage pulses of opposite polarity to the preceding, ie negative, must be fed to the stator windings 1C.

To achieve this the signal 62 is allowed to pass by the combination logic block 20 to drive the switch 2 only when the position sensor 3 provides a low logic value (period T₂) (rotor south pole facing the sensor 3).

In this manner, with alternating positive polarity voltage periods (T₁, T₃, T₅, ....) and negative polarity voltage periods (T₂, T₄, T₆, ....) the rotor 1A accelerates (periods with increasingly shorter alternate polarity) until synchronization with the mains voltage is achieved, hence reaching maximum rotational speed.

As is well known the maximum rotational speed N is a function of the mains frequency (f) and the number of poles (P) of the motor, namely N = (120xf)/P.

If a permanent-magnet single-phase motor is powered at the rated voltage and frequency for which it was designed, its rotational speed under synchronism corresponds to its maximum rotational speed.

It is however possible to reduce the rotational speed without varying the rated power frequency, ie mains frequency, by using an electronic device operating with a logical combination of control and output signals such as that shown in Figure 5.

The principle consists of reducing the value of the voltage applied to the motor until the motor operation becomes unstable (loss of step) with consequent slowing of rotor rotation.

During this stage a progressively increasing delay is produced in the signal (7) to be fed to the static switch 2 until the point at which the rotor rotational speed stabilizes at a certain synchronism value lower than the preceding, defined by the already stated relationship [speed = (120 x supply frequency)/2K] where K = 1 for maximum rotational speed and K = 2 for the immediately lower speed, K = 3 for the next lower speed, etc.

In the case of a 2-pole motor powered at 50 Hz the maximum rotational speed is 3000 r.p.m. and the immediately lower speed (K = 2) is 1500 r.p.m.

Evidently the mechanical power which the motor can deliver for K>1 is reduced in the ratio 1/K from the rated mechanical power and consequently it is not possible at the lower speeds to move the load corresponding to the rated load at mains frequency.

In the same manner if once the speed has been reduced the load becomes too weak, there will be an excess of mechanical power with a consequent tendency to increase the rotational speed. In this case the voltage applied to the motor is further reduced to in practice weaken the power.

Figure 5 shows a logic block 21 which, in contrast to the block 20 of Figure 3, contains the information relative to the desired synchronization speed (ie the value of K). As can be seen from Figure 6, progressively increasing and possibly different delays (td₁ and td₂) with respect to the natural firing times A are produced until the point in which the rotor speed, monitored by the position sensor 3, is brought stably to the desired rotational speed. Figure 6 shows by way of example two operating stages at working speeds of 1500 r.p.m. and 1000 r.p.m.

Figure 7 shows the signal pattern during the transient stage from one speed to the next (from 50 to 25 Hz in the example). In particular, the progressive increase in the delay td, the progressive deformation of the V_{M} voltage wave with reduction in effective value, the reduction in the I_{M} current value and the slowdown of the rotor, visible by the increase in its period of rotation represented by the signal 6 originating from the position sensor 3 can be clearly seen.

On reaching the desired speed the delay time t_{d1} is fixed so as to maintain the rotor in synchronism.

The sequence by which the signals 5 and 6 are combined to obtain the driver signal 7 is the same as already described for Figure 4.

Operating in the aforesaid manner the rotation period obtained for K = 2 is exactly double that for synchronism with the mains, which for a 2-pole motor (powered at f = 50 Hz) corresponds to 1500 r.p.m.

In relation to the bidirectionality of the motor the following considerations apply (Figures 8, 9 and 4).

The rotor 1A is assumed to be at rest in the rest position assumed for Figure 4. The signal 6' relative to the angular position of the rotor as supplied by the sensor 3 is assumed to be in high logic state.

Under these conditions if a voltage having only positive polarity pulses is applied to the motor windings 1C, a current I_{M} will flow through the motor 1, to generate a flux such as to rotate the rotor 1A in a determined direction of rotation (as described in Figure 4).

With reference to Figure 8 showing the angular positions of the rotor 1A at successive times during starting in the direction of rotation defined by the arrow F, it can be seen that as a result of passage of the rotor neutral axis R in front of the sensor 3 (times C), the state of the signal 6' from the sensor 3 changes to produce a reversal of polarity of the current I_{M} and hence a polarity change in the poles of the stator 1B. This determines continuity in the chosen direction of rotation.

The situation represented in Figure 9 will now be considered. The sensor 3 is now positioned on the opposite side of the interpolar centre line to that shown in Figure 8. The signal 6'' relative to the angular position of the rotor as provided by the sensor 3 is still in a high logic state. In this respect, as the sensor 3 is facing a rotor pole of opposite magnetic polarity compared with the situation shown in Figure 8, the signal 6'' should be low. To achieve a high logic state it is therefore sufficient to rotate it through 180° about its axis, ie to reverse the two faces of the sensor 3.

In this manner, for equal parking positions the current I_{M} has an initial polarity identical to that of Figure 8. The initial motion for the entire period T₁ consequently occurs in the same direction of rotation F. However on termination of T₁ the rotor neutral axis R passes in front of the sensor 3 to enable the current pulses of opposite polarity which, also reversing the stator polarity, halt the movement of the rotor and maintain it for a small fraction of a second in an unstable situation (double arrow Z) with its axis on the interpolar centre line (position B). In the meantime the reversal of the current and hence of the stator poles cause it to move in the opposite direction (arrow P) to that of the arrow F. The fact that the position of the sensor 3 is opposite to that of Figure 8 enables, by the usual mechanism for firing the static switch 2 already described in the case of Figure 4, the direction of rotation thus obtained to be maintained, as shown in Figure 9 by the arrow P.

In Figure 10 the logic block 22 receives as input the signals 6' and 6'' originating from two position sensors 3 (both that of Figure 8 and that of Figure 9 used in combination). Depending on the chosen direction of rotation (F or P), one of the two signals is selected to be allowed to filter, in accordance with the reference numeral 622, to the block 21. The logic block 22 hence comprises a rotation direction selector for selecting 6' or 6''.

The same bidirectionality function can be achieved by a single position sensor 3, the signal 6 of which, before being processed by the logic block 21, undergoes a stage of processing within the logic block 22 in the sense that if it is wished to obtain from the signal 6' the signal corresponding to 6'', ie a direction of motion in accordance with P, the signal 6' is converted by the block 22 into the equivalent of the signal 6''. The sequence of control signals and their logic combination follows the same procedure as already described, ie the blocks 21, 11 and 12 maintain the functions already described.

A practical problem which could occur following the positioning of the position sensor 3 will now be examined. The position sensor 3 is physically located such that the signal 6 changes from high to low and vice versa at that particular rotor angular position in which reversal of current polarity and hence of the stator flux enables rotation to be maintained in the required direction. This position will be known as the "optimum" position.

If the position sensor cannot be physically located in the "optimum" position and has to be located in a different position for various reasons due for example to dispersed stator flux or impediments of a mechanical nature, it is possible to recuperate the mechanical angle of offset from the "optimum" position by the processing block 22 by acting on this in terms of lead or delay times.

An additional function which can be obtained from the processing block 22 is to convert an analog signal originating from a particular type of sensor (for example a linear Hall effect sensor) into a digital signal as represented in the various figures by the signal 6, or to convert pulse signals (for example optical encoders) into the signal 6.

## Claims

1. A device for starting and controlling single-phase synchronous motors (1) with a permanent-magnet rotor (1A), comprising a static switch (2) in series with the motor (1) and a handling device (4), characterized in that the switch is driven on the basis of only two data processed by the handling device and relative to the rotor position and the voltage applied to the static switch (2), and hence tapped off (at 8) between the motor (1) and the static switch (2).

2. A device as claimed in Claim 1, characterized in that it comprises at least one position sensor (3) of known type to obtain the data relative to the position of the rotor (1A).

3. A device as claimed in Claim 2, characterized in that it comprises at least two angularly spaced apart position sensors (3) selectively activated on the basis of the chosen direction of motion suitable for obtaining motion bidirectionally.

4. A device as claimed in one or more of the preceding claims, characterized by enabling a synchronism speed to be selected from those obtainable from the relationship: speed=(120 x supply frequency)/2K, where K is a whole number, by introducinq delay times (td) to the firing of the static switch (2).

## Patentansprüche

1. Vorrichtung zum Anfahren und Steuern eines Einphasensynchronmotors (1) mit einem Permanentmagnetrotor (1A), mit einem statischen Schalter (2) in Reihe zu dem Motor (1) und einer Steuerungseinrichtung (4), dadurch gekennzeichnet, daß der Schalter gesteuert wird auf der Grundlage von nur zwei Daten, die von der Steuerungseinrichtung verarbeitet werden, und relativ zu der Rotorposition und der Spannung, die dem statischen Schalter (2) zugeführt und daher (bei 8) zwischen dem Motor (1) und dem statischen Schalter (2) abgegriffen wird.

2. Vorrichtung nach Anspruch 1, gekennzeichnet durch zumindest einen Positionssensor (3) bekannten Typs, um Daten bezüglich der Position des Rotors (1A) zu erhalten.

3. Vorrichtung nach Anspruch 2, gekennzeichnet durch zumindest zwei winkelig gegeneinander versetzte Positionssensoren (3), die wahlweise auf der Grundlage der ausgewählten Bewegungsrichtung aktiviert werden, geeignet, eine bidirektionale Bewegung zu erhalten.

4. Vorrichtung nach einem oder mehreren der vorhergehenden Ansprüche, dadurch gekennzeichnet, daß es möglich ist, eine Synchrongeschwindigkeit aus jenen auszuwählen, die aus der Beziehung erhalten werden können: Geschwindigkeit = (120 x Versorgungsfrequenz)/2K, wobei K eine ganzzahlige Zahl ist, indem Verzögerungszeiten (td) zu der Aktivierung des statischen Schalters (2) eingefügt werden.

## Revendications

1. Dispositif de démarrage et de contrôle de moteurs synchrones monophasés (1) dotés d'un rotor à aimant permanent (1A), comprenant un interrupteur statique (2) en série avec le moteur (1) et un dispositif de commande (4), caractérisé en ce que l'interrupteur est commandé sur la base de seulement deux données traitées par le dispositif de commande et relatives à la position du rotor et à la tension appliquée à l'interrupteur statique (2), et de ce fait captée (en 8) entre le moteur (1) et l'interrupteur statique (2).

2. Dispositif selon la revendication 1, caractérisé en ce qu'il comprend au moins un capteur de position (3) de type connu pour obtenir la donnée relative à la position du rotor (1A).

3. Dispositif selon la revendication 2, caractérisé en ce qu'il comprend au moins deux capteurs de position (3) espacés angulairement et activés sélectivement en fonction du sens de déplacement choisi pour obtenir un mouvement bidirectionnel.

4. Dispositif selon l'une au moins des revendications précédentes, caractérisé en ce qu'il permet de sélectionner une vitesse de synchronisme parmi les vitesses de synchronisme susceptibles d'être obtenues à partir de la relation : vitesse = (120 x fréquence d'alimentation/2 K), où K est un nombre entier, avec introduction de temporisations (td) pour le déclenchement de l'interrupteur statique (2).
